# EUROPEAN PATENT APPLICATION

(11) **EP 1 792 721 A1**
(43) Date of publication of application: **06.06.2007**
(21) Application number: 05774680.2
(22) Date of filing: 25.08.2005
(51) Int. Cl.: B29D 30/60, B29D 30/30

(54) **PNEUMATIC TIRE AND METHOD OF MANUFACTURING THE SAME**

(30) Priority: 03.09.2004 JP 2004257466
(71) Applicant: Bridgestone Corporation, Tokyo 104-8340 (JP)
(72) Inventor: KOYAMA, Yutaka, BRIDGESTONE CORPORATION T. C., Kodaira-shi, Tokyo 187-8531 (JP)
(74) Representative: Whalley, Kevin
(86) International application number: PCT/JP2005/015462
(87) International publication number: WO 2006/025258

(57) **Abstract**

A method is disclosed for reducing separation of ribbon layers of a ribbon-layered body formed by extruding rubber into ribbon-shape and spirally wrapping it around a cylindrical support axially, making overlaps, which occurs when the ribbon-layered body is pressed at axially both ends from the periphery. A ribbon-tread 1 includes a center part 1a, a left part 1b, and a right part 1c. With respect to the left part 1b and the center part 1a of this ribbon-tread, the ribbon is layered from the end toward the center, and with respect to the right part 1c, the ribbon is layered from the end toward the center, axially of a tire (horizontal direction in the drawing) . Because the ribbon-shaped rubber in the right part 1c is layered toward the center part 1a in the same way as the left part 1b, separation of the ribbon layers in the right part 1c, which occurs when both ends of the ribbon-tread is pressed from the radially outside of the tire, is reduced.

## Description

### Technical Field

The present invention relates to a pneumatic tire and a method of producing the same, and more specifically, to a method of spirally layering ribbon-shaped rubber around a cylindrical support such as a belt-and-tread drum or a flat drum axially.

### Background Art

Generally, a green tread, an intermediate material for a tire, is produced by extrusion molding, in which an extruder forces rubber compound, made by blending and mixing natural or synthetic rubber with rubber compounding ingredients such as curatives and fillers, through the mouth of a tread die into a desired shape. However, some treads used for large or extra-large tires, such as tires for construction vehicles, are shaped in another way due to capacity limitations of extruders or like reasons. These treads are shaped into a desired sectional shape by spirally wrapping rubber extruded into ribbon-shape around a green carcass, making overlaps. The above method, in which a tread is shaped by continuously wrapping rubber extruded into ribbon-shape around the green carcass, is also adopted by some small tire factories whose extruders have insufficient capacity, in order to produce treads for tires for passenger vehicles, trucks, and busses. Typically, such ribbon-shaped rubber is about 3 mm to 6 mm thick, and 40 mm to 150 mm wide. A tread shaped into a desired sectional shape by continuously wrapping the ribbon-shaped rubber around a support is called "a ribbon-tread", and distinguished from an extrusion-molded integral tread, which is shaped into a desired sectional shape by continuously extruding rubber from an extruder through the mouth of a tread die. The sectional shape of the above ribbon-tread is called "tread contour" , or simply, "contour".

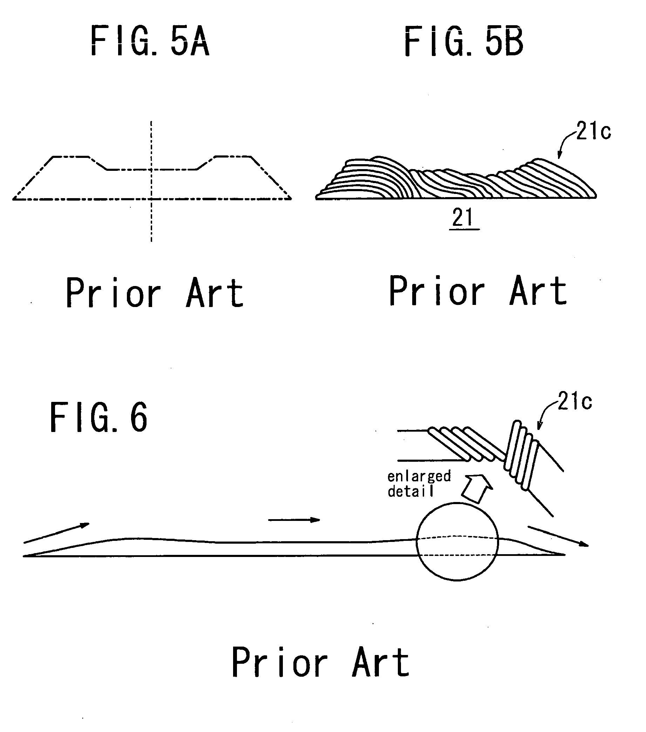

When shaping a tire, a conventional ribbon-tread has been shaped by extruding rubber into ribbon-shape of certain sectional dimensions, and continuously wrapping the rubber around a green carcass, making overlaps. For example, when shaping a tread having a desired sectional shape as shown in FIG. 5A with this conventional technique, a sectional shape of a ribbon-tread 21 will be as shown in FIG. 5B (refer to Patent document 1).

Although it is not described in a document, there is another method of shaping the ribbon-tread having a desired sectional shape. In that method, rubber extruded into ribbon-shape is spirally wrapped around the periphery of a belt-and-tread drum axially, making overlaps. If the ribbon-tread is shaped in the above method, a green tire is shaped in the following way: first, a green case is diametrically expanded from cylindrical shape into toroidal shape; second, the other tire components including a belt and the ribbon-tread are put on the toroidal green case; and third, so-called stitching, a process of pressing these tire components from radially outside with a stitching roll to squeeze air out or like purposes, is given.
Patent document 1: Japanese Patent Application Laid-Open (JP-A) No. 9-29856 (FIG. 1 and FIG. 2)

### Disclosure of the Invention

### Problem to be solved by the Invention

However, there has been a problem that, as shown in FIG. 6, ribbons at an end 21c of the contour, which is on the end side of the wrapping direction (shown by solid arrows in the drawing), tend to separate when the conventional tire components are put on the green case and pressed from the radially outside.

The present invention has been made to solve such a problem, and an object of the invention is to reduce separation of ribbon layers, which occurs when a ribbon-layered body, formed by extruding rubber into ribbon-shape and spirally wrapping it around a cylindrical support axially, making overlaps, is pressed at axially both ends from the periphery.

### Means for Solving Problem

A first aspect of the invention is a method of producing a ribbon-layered body by extruding rubber into ribbon-shape and spirally wrapping it around a cylindrical support axially, making overlaps, comprising the steps of: wrapping said rubber around said support axially from one end toward the other end, on the portions of said one end and the center; and wrapping said rubber around said support axially from the other end toward said one end, on the portion of said the other end.

A second aspect of the invention is a method of producing a ribbon-layered body by extruding rubber into ribbon-shape and spirally wrapping it around a cylindrical support axially, making overlaps, comprising the steps of: wrapping said rubber around said support axially from one end toward the other end, on the portion of said one end to the other end; and wrapping said rubber around said support axially from the other end toward said one end, on the portion of said the other end.

A third aspect of the invention is the method of producing a ribbon-layered body according to the first or second aspects, wherein said ribbon-layered body is a ribbon-tread.

A fourth aspect of the invention is a pneumatic tire comprising a ribbon-layered body formed by extruding rubber into ribbon-shape and spirally wrapping it around a cylindrical support axially, making overlaps, wherein said ribbon-layered body comprises: one end layer and center layer formed by wrapping said rubber around said support axially from one end toward the other end, on the portions of said one end and the center; and the other end layer formed by wrapping said rubber around said support axially from the other end toward said one end, on the portion of said the other end.

A fifth aspect of the invention is the pneumatic tire according to the fourth aspect, comprising an inner layer, formed by wrapping said rubber around said support axially from one end toward the other end, on the portion of said the other end and inside of said the other end layer radially of a tire.

A sixth aspect of the invention is the pneumatic tire according to the fourth aspect, wherein said ribbon-layered body is a ribbon-tread.

A seventh aspect of the invention is the pneumatic tire according to the fourth aspect, wherein said the other end layer is disposed as the outermost layer of all tire components.

### Effect of the Invention

According to the present invention, because the ribbons at axially both ends of the ribbon-layered body are layered from the axially ends to the center, separation of ribbons, which occurs when the ribbon-layered body is pressed at both ends from the periphery, can be reduced.

### Brief Description of the Drawings

FIG. 1 is a sectional view of a ribbon-layered body according to a first embodiment of the present invention;
FIG. 2 is a perspective view of an apparatus for producing a ribbon-tread according to the first embodiment of the present invention;
FIG. 3 is a diagram showing a process of forming the ribbon-tread of FIG. 1, and a state of ribbon layers when both ends of the ribbon-tread are pressed from the periphery;
FIG. 4 is a sectional view of a ribbon-layered body according to a second embodiment of the present invention;
FIG. 5A and FIG. 5B are sectional views of a conventional ribbon-tread; and
FIG. 6 is a diagram showing a process of forming the ribbon-tread of FIGS. 5A and 5B, and a state of ribbon layers when both ends of the ribbon-tread are pressed from the periphery.

### Description of the Reference Numerals

- 1 and 5:: ribbon-tread;
- 1a and 5a:: center part;
- 1b and 5b:: left part;
- 1c and 5c:: right part;
- 5c₁:: inner layer; and
- 5C₂:: outer layer.

### Best Mode for Carrying Out the Invention

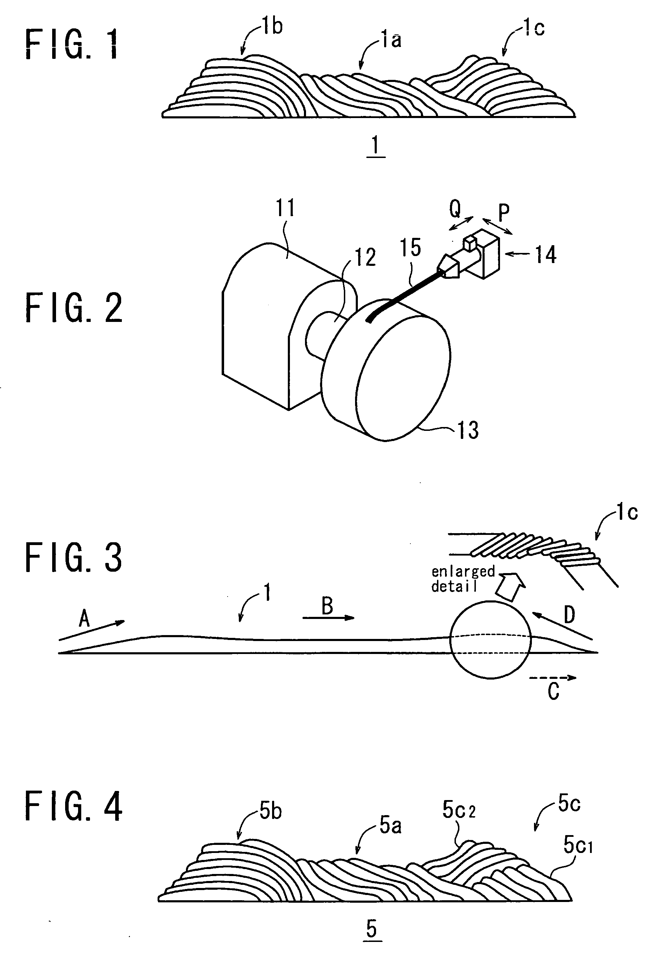

Now, embodiments of the present invention will be described with reference to the drawings. FIG. 1 is a sectional view of a ribbon-layered body according to a first embodiment of the present invention. The ribbon-layered body according to the present embodiment is a ribbon-tread. A ribbon-tread 1 comprises a center part 1a, a left part 1b, and a right part 1c. In this ribbon-tread, ribbon-shaped rubber with respect to the left part 1b and the center part 1a are layered from the left end toward the center, axially of a tire (in the horizontal direction in the drawing), and with respect to the right part 1c is layered from the right end toward the center.

FIG. 2 is a perspective view of a tread-producing apparatus for producing the ribbon-tread according to the present embodiment. This tread-producing apparatus comprises: a base 11; a rotating shaft 12 which is connected to a motor housed in the base 11, and extending from one side of the base 11; a cylindrical support 13 mounted to the rotating shaft 12; and a rubber extruder 14.

The rubber extruder 14 plasticizes rubber fed from a hopper with an internal screw, and extrudes ribbon-shaped rubber 15 through the mouth of a die facing the support 13. The rubber extruder 14 can be moved parallel to and perpendicular to the axis of rotation of the support 13 , the directions shown by arrows P and Q, respectively. The rubber extruder 14 extrudes the ribbon-shaped rubber 15, controlling the speed of movement thereof parallel to the axis of rotation, relative to the speed of rotation of the support 13. The ribbon-shaped rubber 15 is spirally wrapped around the support 13 with controlled amount of overlaps. The ribbon-tread is thus formed on the support 13.

FIG. 3 is a diagram showing a process of forming the ribbon-tread of FIG. 1, and a state of ribbon layers when both ends of the ribbon-tread is pressed from the radially outside of a tire. When forming the ribbon-tread 1 of FIG. 1, first, the left part 1b is layered by moving the rubber extruder 14 from the left end toward the right end (in the direction shown by the arrow A), with extruding the ribbon-shaped rubber 15 therefrom and spirally wrapping it around the support. Next, the center part 1a is layered by continuing the wrapping in the same direction (the direction shown by the arrow B). Then, the rubber extruder 14 is moved to the right end (in the direction shown by the dotted-line arrow C) without extruding the ribbon-shaped rubber 15. Finally, the right part 1c is layered by moving the rubber extruder 14 from the right end toward the left end (in the direction shown by the arrow D), with extruding the ribbon-shaped rubber 15 therefrom and spirally wrapping it around the support.

In the ribbon-tread according to the present embodiment, the ribbon-shaped rubber of the right part 1c is layered toward the center part 1a, in the same way as the left part 1b is. Therefore, as shown in FIG. 3, separation of the ribbon layers in the right part 1c, which has occurred when the ribbon-tread is put on a green case and pressed from the radially outside, is reduced.

FIG. 4 is a sectional view of a ribbon-layered body according to a second embodiment of the present invention. The ribbon-layered body according to the present embodiment is also a ribbon-tread. A ribbon-tread 5 comprises a center part 5a, a left part 5b, and a right part 5c. The ribbons of this ribbon-tread with respect to the left part 5b and the center part 5a are layered from the left end toward the center, axially of a tire (horizontal direction in the drawing), which is the same as the first embodiment. The right part 5c comprises an inner layer 5c₁ layered from the left end toward the center (and thus, from the center toward the right end), and an outer layer 5c₂ layered from the right end toward the center, axially.

In the present embodiment, the process of forming the left part 5b and the center part 5a of the ribbon-tread is the same as the first embodiment. On the other hand, the right part 5c is formed in two steps: first, the inner layer 5c₁ is layered (in the step shown by the arrow C in FIG. 3), and second, the outer layer 5c₂ is layered (in the step shown by the arrow D in FIG. 3). Also in the ribbon-tread 5 according to the present embodiment, the ribbon-shaped rubber of the outer layer 5c₂ of the right part 5c is layered from the right end toward the center part 5a, axially. Therefore, the present embodiment provides the same effect as the first embodiment.

Although it has been described that the left part 5b is layered in one step while the right part 5c is layered in two steps in the second embodiment, the left part 5b may also be layered in two steps. Because the ribbon-shaped rubber used in the first and second embodiments is narrow and thin (for example, 15 mm wide and 0.8 mm thick), in order to form the ribbon-tread as a unitary tire component, the rubber layer can be stacked up to, not just one or two tiers (as shown in FIG 1, and the right part 5c in FIG. 4, respectively), but three or more tiers. In such cases, by making the uppermost layer to be layered from both ends toward the center, occurrence of separation of the ribbon layers can be reduced.

Although the above embodiments relate to the ribbon-tread, the ribbon-layered body according to the present invention can be applied not only to the tread, but also to other tire components such as sidewall, chafer, and innerliner having the structure of a ribbon-layered body. And it is preferable that the method and structure of the present invention be applied to the outermost layer, if these tire components have plural layers radially of a tire.

## Claims

1. A method of producing a ribbon-layered body by extruding rubber into ribbon-shape and spirally wrapping it around a cylindrical support axially, making overlaps, comprising the steps of: wrapping said rubber around said support axially from one end toward the other end, on the portions of said one end and the center; and wrapping said rubber around said support axially from the other end toward said one end, on the portion of said the other end.

2. A method of producing a ribbon-layered body by extruding rubber into ribbon-shape and spirally wrapping it around a cylindrical support axially, making overlaps, comprising the steps of: wrapping said rubber around said support axially from one end toward the other end, on the portion of said one end to the other end; and wrapping said rubber around said support axially from the other end toward said one end, on the portion of said the other end.

3. The method of producing a ribbon-layered body according to claim 1 or 2, wherein said ribbon-layered body is a ribbon-tread.

4. A pneumatic tire comprising a ribbon-layered body formed by extruding rubber into ribbon-shape and spirally wrapping it around a cylindrical support axially, making overlaps, wherein said ribbon-layered body comprises: one end layer and center layer formed by wrapping said rubber around said support axially from one end toward the other end, on the portions of said one end and the center; and the other end layer formed by wrapping said rubber around said support axially from the other end toward said one end, on the portion of said the other end.

5. The pneumatic tire according to claim 4, comprising an inner layer, formed by wrapping said rubber around said support axially from one end toward the other end, on the portion of said the other end and inside of said the other end layer radially of a tire.

6. The pneumatic tire according to claim 4, wherein said ribbon-layered body is a ribbon-tread.

7. The pneumatic tire according to claim 4, wherein said the other end layer is disposed as the outermost layer of all tire components.
